# EUROPEAN PATENT SPECIFICATION

(11) **EP 1 412 060 B1**
(45) Date of publication and mention of the grant of the patent: **29.03.2006**
(21) Application number: 02755110.0
(22) Date of filing: 30.07.2002
(51) Int. Cl.: B01D 53/94, F01N 3/023, F01N 3/035

(54) **GASOLINE ENGINE WITH AN EXHAUST SYSTEM FOR COMBUSTING PARTICULATE MATTER**
BENZINMOTOR MIT ABGASANLAGE ZUR VERBRENNUNG VON PARTIKELN
MOTEUR A ESSENCE AVEC SYSTEME D'ECHAPPEMENT A COMBUSTION DES PARTICULES

(30) Priority: 01.08.2001 GB 0118748; 06.08.2001 GB 0119107
(43) Date of publication of application: 28.04.2004
(73) Proprietor: JOHNSON MATTHEY PUBLIC LIMITED COMPANY, London SW1Y 5BQ (GB)
(72) Inventor: MCNAMARA, John, Martin, Stevenston, Ayrshire KA20 4BS (GB); EVANS, Julia, Margaret, Wallingford Oxon OX10 0TD (GB); POULSTON, Stephen, Reading RG1 5QA (GB); RAJARAM, Raj, Rao, Slough SL3 7PH (GB); CRANE, Robert, Dept. of Mechanical Engineering, Exhibition Road, London SW7 2BX (GB); ARCOUMANIS, Constantine, School of Engineering, London EC1V 0HB (GB); Rubino, Lauretta, Royston Hertfordshire SG8 9DL (GB)
(74) Representative: Nunn, Andrew Dominic
(86) International application number: PCT/GB2002/003500
(87) International publication number: WO 2003/011437

(56) References cited:
- EP-A- 0 341 832
- EP-A- 0 903 476
- EP-A- 1 057 519
- EP-A- 1 077 078
- EP-A- 1 108 460
- WO-A-01/96717
- GB-A- 2 232 613

## Description

The present invention relates to an exhaust system for treating exhaust gases from a gasoline engine, and in particular it relates to an exhaust system for trapping and combusting fine particulate matter in the exhaust gas.

It is very well known that gas-borne particulates can cause health problems if inhaled. It is also well known that diesel engines emit particulates, especially upon start-up and under heavy load, and this can be observed with the naked eye. Concern about particulates has led to the introduction of various National or European regulations to control the quantity of particulates emitted from diesel engines. Johnson Matthey has patented and commercially introduced a device called a CRT® for diesel engines, particularly heavy-duty diesel engines ((as defined by the relevant European, US Federal or Californian legislation) see EP-B-341832 and US-A-4,902,487) which has made available a self-regenerating diesel filter device.

However, it is not generally appreciated that many modem gasoline engines emit large numbers of very small (<0.1 µm generally 10-100 nm) particulate matter (PM), which because of its small size is not observed by the naked eye. Nonetheless, the size of this PM is such that it can be inhaled into the deepest recesses of the lungs and may even be more hazardous than the PM from diesel engines. Indeed, as reported in the Proceedings from the 2^{nd} International Conference on Health Effects of Vehicle Emissions, Ed. K. Donaldson, (2000), PM poses a significant threat to health in the UK. Over 8000 deaths are thought to be related to this form of emission. It has been suggested that particles in the size range 10-100 nm, of which 60% of those in the atmosphere are vehicle derived, penetrate deep inside the lungs causing respiratory and cardiovascular disease.

We believe that the latest types of lean-burn gasoline engines, such as direct injection e.g. GDI and direct injection spark-ignition (DISI), produce large amounts of fine PM. Furthermore, we believe that the fuel efficiency of such lean-burn gasoline engines will result in their increasing use in private cars and small utility vehicles. Also, recent research indicates that there is considerable PM generation from port fuel injection or stoichiometrically operated (air/fuel ratios of approximately 14.7:1) gasoline engines at high load, such as during high speed driving or ascending a steep slope. In particular, at such high loads it is found that the number of PM in the exhaust is equivalent to normally operated diesel engine, although the mass of PM is much less than in diesel exhaust. (See "Study of the number, size and mass of exhaust particles emitted from European Diesel and Gasoline vehicles under steady-state and European driving cycle conditions", Concawe, report no. 98/51).

Typically, average exhaust gas temperatures for a stoichiometrically operated gasoline engine are between 600-800°C and for GDI between about 300-550°C, although at high speed, GDI engines can revert to stoichiometric operation and hotter exhaust gas temperatures are reached. Exhaust gas temperatures from diesel engines, however, are much cooler than gasoline engines. Typically, for passenger vehicles using light-duty diesel engines, exhaust gas temperatures are in the range from 200-350°C and, for a heavy-duty diesel plant, about 200-550°C.

In seeking to combust gasoline PM, one problem is that the amount of oxidant available in the exhaust gas for combusting the PM downstream of a three-way catalyst (TWC) is generally very low at approximately 0.03% v/v (300 ppm). By comparison diesel exhaust gas typically includes between 2-12% O₂ v/v at maximum output (up to 18% O₂ v/v at idle). Modem gasoline vehicles, including stoichiometric and lean-burn engines, typically include a TWC in the close-coupled position, i.e. close to the exhaust manifold. This is to treat exhaust gas in the period immediately following start-up, whereby the close-coupled catalyst benefits from heat generated by the combustion event to more rapidly reach light-off temperature than a catalyst in the underfloor location.

Two possible sources of oxygen in gasoline exhaust gas include water vapour (present at about 9% v/v) and carbon dioxide (about 18% v/v). The method of using water vapour as an oxidant is known as steam gasification and the reverse-Boudouard reaction is the term given to the oxidation of species with CO₂. General equations for the steam gasification of carbonaceous PM are represented by equations (1), (2) and (3) and for the reverse-Boudouard reaction by equation (4).

C(s) + 2H₂O(g) → CO₂(g) + 2H₂(g) (1)

2C(s) + 2H₂O(g) → CO₂(g) + CH₄(g) (2)

C(s) + H₂O(g) → CO(g) + H₂(g) (3)

C(s) + CO₂(g) → 2CO(g) (4)

A common device using electrostatic fields to remove suspended particles from a gas is known as the electrostatic precipitator (ESP). Particles entering an ESP are charged in an electric field and then moved to a surface of opposite polarity where deposition occurs. Electrostatic precipitators consist mainly of a grounded cylinder (the collecting electrode) and a coaxial high potential wire (the corona discharge electrode). An alternative basic design consists of two grounded parallel plates (the collecting electrode) together with an array of parallel discharge wires mounted in a plane midway between the plates. If a sufficient potential difference exists between the discharge and the collecting electrodes, a corona discharge will form. The corona serves as a copious source of unipolar ions of the same sign as that of the discharge electrode; the aerosol particles are then charged by ion collision and attracted to the collecting surface.

GB-A-2232613 describes a catalyst for the oxidation of carbonaceous particulates carried in a gaseous phase and exemplifies its use in treating diesel engine exhaust emissions. The catalyst comprises ceria and a ceramic oxide (preferably alumina) with a compound of an element of Group 1A of the periodic table. The catalyst is made by combining a sol of the ceramic oxide with another of the cerium (IV) oxide and then adding a dispersion of a compound of Group 1A. The mixture is coated to a substrate, dried and calcined. An Example is described wherein the Group 1A compound is K₂O or Rb₂CO₃. The onset temperature (defined as the temperature where carbon just begins to oxidise significantly and burn to CO₂) for PM collected from a diesel engine is 364°C and 335°C respectively. The document does not mention gasoline engines as a source for PM or of the use of the catalysts described for treating gasoline-derived PM.

US-A-5,837,212 describes a lean NOx trap comprising a porous support; and catalysts consisting of manganese and potassium loaded on the support. During lean-burn operation of the engine the trap sorbs NOx and releases NOx during decreased oxygen concentration in the exhaust gas. There is no suggestion in the document that the catalysts can be used in conjunction with a gasoline particulate trap.

US-A-6,038,854 describes an internal combustion exhaust connected by a pipe to a chamber where carbon-containing particles are electrostatically trapped or filtered and a non-thermal plasma converts NO to NO₂ in the presence of O₂ and hydrocarbons. Volatile hydrocarbons (CₓH_{y}) from the trapped particulates react with the NO₂ to convert NO₂ to N₂, and the soot to CO₂. Illustrated embodiments include a plasma-assisted particulate trap; a plasma reactor upstream of a particulate trap; a plasma reactor upstream of a particulate trap reactor which is upstream of a catalytic reactor; and a particulate trap cylindrically concentric about a plasma reactor therewithin and, optionally, having a catalytic converter cylindrically concentric about the trap.

EP-A-1057519 discloses an arrangement according to the pre-characterising portion of claim 1.

We have now found, very surprisingly, that catalysts comprising at least one alkali metal are active for oxidising gasoline PM with CO₂ and H₂O from the exhaust gas which has been treated with a TWC at temperatures within the typical temperature range of exhaust gas from a gasoline engine. By "gasoline engine" herein, we include both stoichiometric and lean-burn engines, such as direct injection gasoline engines, e.g. GDI and DISI engines.

According to one aspect, the invention provides a gasoline engine having an exhaust system, which exhaust system comprising means for trapping particulate matter (PM) from the exhaust gas and a catalyst comprising a supported alkali metal for catalysing the oxidation of the PM, characterised in that the exhaust system comprises a three-way catalyst located between the engine and the PM oxidation catalyst and in that the trapping means is suitable for trapping PM of <100nm.

In use, we believe that the at least one alkali metal can be present as elemental metal, its oxide, its hydroxide or its carbonate, although possibly also as its nitrate or its sulfate. Whilst the catalysts of the invention are especially suited to catalysing the oxidation of PM with CO₂ and/or H₂O, it will be appreciated that such catalysts are also capable of catalysing the oxidation of PM with any O₂ present in the exhaust gas, for example as seen in GB-A-2232613. The combustion of PM in O₂ can occur at lower temperatures than in CO₂ and H₂O.

Preferably, the at least one alkali metal is lithium, sodium, potassium, rubidium or caesium or a mixture of any two or more thereof, preferably potassium. Where the at least one alkali metal is a mixture, we prefer that the mixture is a eutectic mixture.

The elemental alkali metal can be present in the catalyst at from 1% to 20% by weight of the total catalyst, preferably from 5-15% by weight and most preferably 10% by weight.

The support for the at least one alkali metal can be alumina, ceria, zirconia, titania, a silica-alumina, a zeolite or a mixture or a mixed oxide of any two or more thereof. Advantageously, we prefer that the surface area of the support is as low as possible. This is because we believe that the alkali metal catalyst can be mobile, e.g. molten, at its working temperatures. If the support is porous, the mobile alkali metal can migrate into the pores away from the surface of the support, thus effectively reducing the surface area of the alkali metal and with it the activity of the catalyst. Thus, where the support is alumina, we prefer to use alpha-alumina (surface area 1-5 m² g⁻¹) or theta-alumina (90 m² g⁻¹), although gamma-alumina (140 m² g⁻¹) can also be used, or a mixture of any two or more thereof.

Most preferably, the at least one alkali metal is potassium and the support is alpha-alumina, zirconia or ceria or a mixture or mixed oxide of any two or more thereof.

Where the support is a mixed oxide, each component oxide of the mixed oxide can be present in an amount of from 10% to 90% by weight of total catalyst weight. For example, in a binary mixed oxide, the ratio of the cationic components can be from between 20:80 and 50:50 by weight of the total catalyst.

The substrate for the supported at least one alkali metal can be the internal surface of a conduit carrying the exhaust gas which conduit can be of metal or ceramic, or a metal or ceramic flow-through or wall-flow filter monolith, foam, e.g. metal oxide foam, or wire mesh.

The means for trapping can comprise any apparatus suitable for trapping the PM of the appropriate particle size, e.g. between about 10-100 nm. Such means can include a wall-flow filter made from a ceramic material of appropriate pore size such as cordierite. Where a filter is used, the filter can be coated, at least in part, with the catalyst in order to effect contact between the catalyst and the PM.

Alternatively, the trapping means can comprise a foam e.g. a metal oxide foam, wherein the foam can act as a filter. The foam *per se* can comprise the support, i.e. the foam is both support and substrate, or the foam can be the substrate and a support e.g. comprising a high surface area metal oxide washcoat, can be coated thereon. Any suitable metal oxide foam can be used, but we prefer materials having the sufficient robustness for use in exhaust systems. Non-limiting examples of foams include alpha-Al₂O₃, ZrO₂/MgO, ZrO₂/CaO/MgO and ZrO₂/Al₂O₃.

Another substrate is a wire mesh and this can comprise the support, i.e. the wire mesh can be both support and substrate, or it can be a substrate to which a catalyst support is coated. Where the wire mesh is both support and substrate, suitable pretreatment of the wire mesh can be used to "key" the coating to the wire mesh. Such techniques are known in the art and include a sol base layer or a NaOH(aq) surface pretreatment. These techniques can also be used to "key" the catalyst to metal surfaces such as the flow-through monolith and conduit surfaces described above.

Alternatively, more conventional filter technology such as wall-flow filters used for diesel applications and well known to persons skilled in the art can be used as a catalyst support. A further, less preferred, trapping means utilises thermophoresis and is described in our GB-A-2350804.

Alternatively, or in addition, the trapping means can comprise a discharging electrode and a collecting electrode for electrostatic deposition of the PM and power means for applying a potential difference between the discharging electrode and the collecting electrode, i.e. the deposition method involves electrophoresis.

In embodiments of the present invention, geometries of the discharging and collecting electrodes can include: (i) a first cylinder and a wire disposed coaxially therein; (ii) in a variation of the embodiment at (i), a plurality of further wires extending longitudinally relative to the cylinder, which wires are arranged equidistantly and radially about the coaxially disposed wire; (iii) in a variation on the embodiments at (i) and (ii), the first cylinder comprises inner and outer surfaces and an insulating layer is disposed therebetween, which first cylinder is coaxially disposed within a second cylinder, the arrangement being such that the power means is capable of applying a potential difference between the coaxial wire and the inner surface of the first cylinder and between the outer surface of the first cylinder and the second cylinder; (iv) a plurality of first or second cylinders of embodiment (i), (ii) or (iii) above arranged in parallel; and (v) a pair of plates arranged in parallel and a plurality of wires arranged equidistantly in parallel to each other and disposed midway between the plates.

In one embodiment according to the invention, the collecting electrode in the electrophoretic trapping means can be earthed. In embodiment (i), (ii) and (iv) above, the collecting electrode can be the or each first cylinder; in embodiment (iii), the collecting electrode can be the inner surface of the first cylinder and the second cylinder; and in embodiment (v), the collecting electrodes can be the plates.

In the electrophoretic trap embodiments of the present invention, the catalyst can be coated, at least in part, on the collecting electrode.

In a particularly preferred embodiment, the first or second cylinder is a section of the exhaust pipe carrying the exhaust gas. This arrangement has the advantage that it is relatively non-intrusive to the typical configuration of a vehicle exhaust system, i.e. the presence of the coaxial wire(s) and the means for holding the coaxial wire in its coaxial arrangement and for holding any additional wires parallel thereto, e.g. ceramic insulators or ceramic tubes, do not alter the pressure drop in the exhaust pipe. Accordingly, there is little or no impact on the efficiency of the engine.

An advantage of the present invention incorporating an electrostatic trap, such as the cylinder-wire embodiments, is that they have a relatively low power consumption e.g. about 10W, therefore there is minimal impact on the overall efficiency of the vehicle.

According to a further aspect, the invention provides a method of combusting PM from a gasoline engine characterised by contacting the exhaust gas with a three-way catalyst (TWC), trapping PM of <100nm from exhaust gas downstream from the TWC and combusting the trapped PM in CO₂ and/or H₂O in the exhaust gas using a catalyst comprising a supported alkali metal at temperatures in excess of 500°C e.g. 550°C, 600°C or 700°C.

In order that the invention may be more fully understood, the following Examples are provided by way of illustration only wherein reference is made to the accompanying drawings in which:
Figure 1 is a bar chart of temperature (°C) against oxygen source comparing the activity of a 10wt%K/Ceria catalyst with a control;
Figure 2 is a schematic diagram of a laboratory simulation test rig for trap evaluation;
Figure 3 is a trace showing time-resolved particle number density from the four lowest-size stages (channels) of an electrical low pressure impactor (ELPI), during five minute portions of a nominal steady state test at the equivalent road speed of 80km/h performed on a 1.8 litre GDI engine fitted with a wall flow particulate filter;
Figure 4 shows the wall-flow filter performance: time variation of particle number density, of the Figure 3 system over the final ten minutes of the European ECE + EUDC drive cycle for two sizes (in nm) denoted by number beside the curves;
Figure 5 is a bar chart showing the performance of a cylinder-wire electrostatic precipitator to trap PM of four sizes (in nm) measured at cylinder outlet over a range of potential differences applied between the grounded cylinder and the wire relative to a control; and
Figure 6 shows the performance, as represented by % collection efficiency by number against mobility diameter D p (nm), of a wire-cylinder trap wherein the inner surface of the cylinder is coated with a catalyst according to the invention compared to an identical uncoated device.

### EXAMPLE 1

### Catalyst preparation

A 10wt%K/Al₂O₃, 10wt%K/CeO₂ and 10wt%K/ZrO₂ (as the elemental alkali metal based on the total weight of the catalyst) was prepared by wet impregnation. In each case the impregnation medium was an aqueous solution of KNO₃. A mixture of the correct amounts of the support and impregnation solution was heated to evaporate the water and the material was calcined at 500°C for 2 hours. Three alumina supports were used: alpha-, theta- and gamma-. We understand that the alkali metal is present as K₂O in each catalyst, although some residual KNO₃ may be present post-calcination.

### EXAMPLE 2

### Catalyst ageing

Pelletised catalysts of Example 1 were aged in a simulated stoichiometric gasoline exhaust gas mixture of nitrogen, water, carbon monoxide, hydrogen, oxygen, sulphur dioxide at 850°C for 2 hours and 16 hours.

### EXAMPLE 3

### Preparation of catalyst/particulate matter samples

Fresh catalyst of Example 1 and aged catalyst from Example 2 were each mixed with about 30-40% w/w carbonaceous PM (BP2000 - high surface area graphite, a simulant for gasoline exhaust PM) lightly in a mortar and pestle to ensure thorough mixing. Light mixing was employed in order to simulate real conditions in an exhaust system in which the gasoline PM would loosely contact a trap device including a catalyst. Thus heavy grinding, which would promote too tight a contact between the PM and the trap, was avoided.

### EXAMPLE 4

### Sample testing

The samples of Example 3 were tested in synthetic gas streams including oxygen, water or CO₂ to simulate the temperature and concentration of oxygen, water and CO₂ components found in a gasoline exhaust gas. This approach has the advantage that oxidation in oxygen and the steam gasification and reverse-Boudouard reactions can be studied in isolation, whereas in practice the exhaust gas will comprise a mixture of oxygen, water vapour and CO₂ among others and the three processes can occur simultaneously.

The samples of Example 3 were tested using Thermogravimetric Analysis (TGA) to determine the temperature where significant weight loss of the samples occurred, indicating the point where combustion or any phase changes within each sample took place. The technique operates using a microbalance, which measures weight change as a function of temperature. When the combustion temperature is reached, the carbon is removed as either CO₂ or CO and therefore the weight of the sample decreases.

Temperature Programmed Oxidation (TPO) was used to measure the effect of water as a source of oxygen for combustion. TPO involves passing helium through a water saturator at room temperature and then over the catalyst. The production of CO₂ and CO is then monitored as a function of temperature.

The conditions used for each of these techniques are described in Table 1.

**Table 1: Conditions used for the Combustion Reactions**

| **Technique** | **Gases** | **Flow-rates** | **Final Temp.** | **Ramp-rates** |
|---|---|---|---|---|
| | | **(ml min**^{**-1**}**)** | **(°C)** | **(°C min**^{**-1**}**)** |
| TGA | Air | 100 | 700 | 15 |
| | 10%CO₂/Ar | 100 | 1200 | 15 |
| | Ar | 100 | 1200 | 15 |
| TPO | H₂O/He | 75-80 | 900 | 10 |

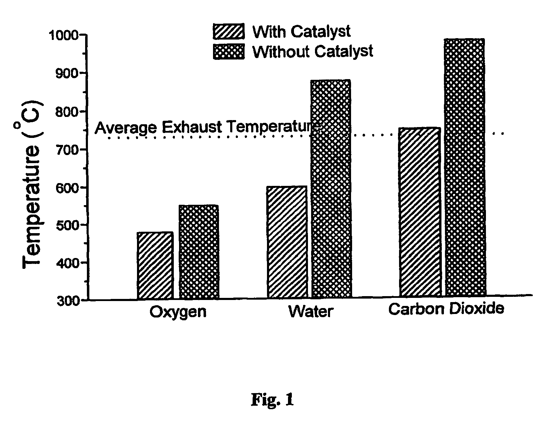

The results for the samples are given in the attached Tables 2, 3 and 4. Figure 1 summarises the results for 10wt%K/Ceria, showing that the temperatures for combustion of PM in oxygen, water and CO₂ are within the normal operating temperature of a gasoline exhaust system for a European passenger vehicle.

Reactions involving gas phase reactants can use conventional heterogeneous catalysts. However, catalysts for reacting solid carbon with carbon dioxide, steam or oxygen, preferably have different properties from conventional heterogeneous catalysts. In order to catalyse the reaction with solid carbon it is understood that the catalyst should come into contact with the carbon material to create a boundary across which oxygen can be transferred. To achieve this, it is preferred that the active component of the catalyst is mobile at reaction temperature. This is illustrated by comparison of the potassium-based catalysts with a Pt/Zirconia catalyst. Combustion in oxygen using 10wt%K/Zirconia is initiated at 391°C, (an improvement on the non-catalytic reaction that takes place at approximately 550°C). In comparison, when 1wt%Pt/Zirconia is used, temperatures as high as 523°C are required. The reason behind this observation is probably that at 350°C the active potassium oxide begins to melt and so becomes mobile although still retained within the pore structure of the zirconia. In contrast, platinum oxide decomposes at approximately 550°C, and the metal particles formed are immobile until higher temperatures are reached, consequently limiting the contact between catalyst and soot at lower temperatures.

As can be seen from the results shown in Tables 2, 3 and 4, the catalysts of the present invention reduce the combustion temperature of simulated gasoline PM to gasoline exhaust gas temperatures. Furthermore, it can be seen that lower surface area supports retain catalyst activity at lower temperatures following high temperature ageing. This is believed to be because the metal compounds are mobile at active temperatures and they can migrate deep into the smallest pores of higher surface area supports, thereby reducing the effective surface area of the alkali metal and making it less available to catalyse the relevant reaction.

Furthermore, the results in the Tables 2, 3 and 4 show that the support material can have a role to play in the chemistry of the process. The initial combustion temperatures of the reactions of oxygen, water and carbon dioxide with carbon can be reduced further when using 10wt%K/Ceria and 10wt%K/Zirconia than for α-alumina supported catalyst. The benefit is most noticeable in the case of 10wt%K/Ceria for the reaction of carbon dioxide with PM: combustion starts to take place at 712°C for the fresh catalyst, increasing slightly to 746°C and 748°C for the 2 hours and 16 hours aged samples. In the case of 10wt%K/Zirconia, the most significant improvement occurs in the steam gasification reaction. Initial combustion is detected at 477°C for the fresh catalyst again increasing slightly to 477°C and 532°C for the 2 hours and 16 hours aged samples.

It should be noted that all of the above catalysed reactions, with the exception of 1wt%Pt/Zirconia, occur at significantly lower temperature than the non-catalysed reactions. This improvement could be due to the redox properties of these support materials i.e. both ceria and zirconia can undergo oxidation or reduction readily depending on the conditions (CeO₂ ↔ Ce₂O₃, ZrO₂ ↔ Zr₂O₃).

Another property of the catalysts of the present invention is that it is understood that they can activate carbon dioxide and water in order to transfer the oxygen to trapped PM. At present the reason for this improvement is not fully understood, but we believe it is the ability of the alkali metals to form reactive intermediates in the presence of carbon dioxide and water that make them the most suitable catalysts for this purpose. Again, comparison of the potassium based catalysts with 1wt%Pt/Zirconia, relative to the non-catalysed reactions, show that the alkali metals can reduce the initial combustion temperatures by up to 300°C unlike the platinum catalyst, which only reduces the temperature by approximately 30-50°C.

### EXAMPLE 5

### Particulate filters

25 mm-diameter x 152 mm length cores were extracted from Coming EX-80 100/17 cordierite wall-flow filter.

### Tests in laboratory flow rig

Carbon particles were generated by spark discharge between graphite electrodes in a Palas GFG1000 carbon aerosol generator (CAG). 10-200 nm agglomerates from the CAG, in an inert carrier/dilution gas (argon/nitrogen), were then dispersed in a synthetic gas mixture which can include water and hydrocarbon vapours. While the elemental carbon fraction of particulates from PFI engines is normally not more than ~40%, considerable variability from similar light-duty gasoline vehicles has been found, with significant elemental carbon emissions in some cases. GDI engines can produce particulates more closely resembling those from diesel engines, up to 72% carbon being reported, so this simulation approach is particularly relevant to GDI engines.

The particle-laden gas flowed in a straight, 50 mm diameter, insulated, stainless steel pipe, 3 m in length, to which after-treatment devices could be attached in-line. An in-line process heater and heating tape were used to achieve the desired uniform gas temperature. Particles were sampled using 6.5 mm stainless steel probes and measurements of number concentration and size distribution were made using a TSI Scanning Mobility Particle Sizer (SMPS) comprising a model 3081L electrostatic classifier (EC) and a model 3022 condensation particle counter (CPC). To keep sample temperature below the 36°C limit, samples were diluted with particle-free nitrogen in a three-stage ejector system.

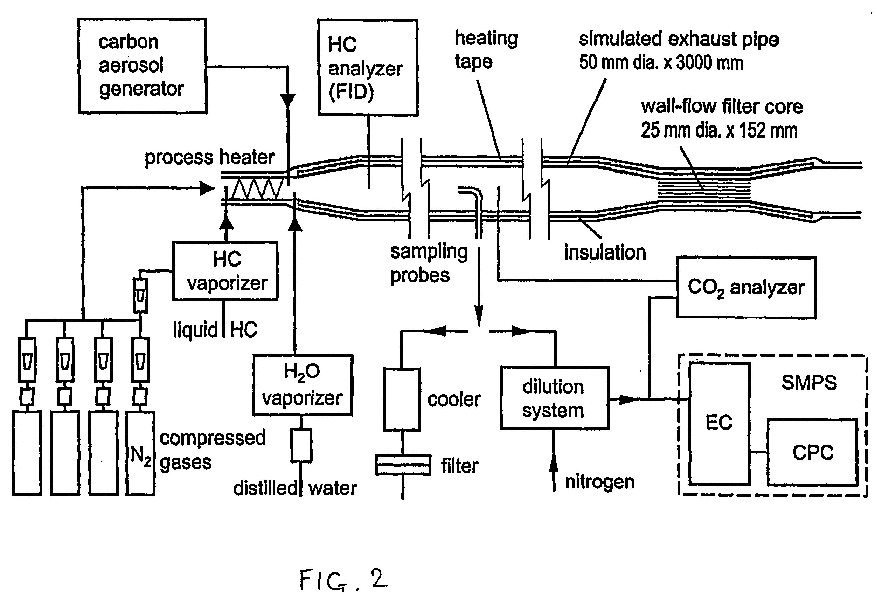

The laboratory simulation test rig for trap evaluation is shown schematically in Figure 2.

For the tests reported here, the synthetic gas was composed only of particle-free air together with the CAG carrier/dilution gas. Tests were carried out at a fixed gas mass flow rate and temperatures T between ambient and 400°C and for filter exposure times up to 20 hours. [Temperatures were limited to a maximum of 400°C by the heating sources used in the laboratory test rig. However, the trends shown in the results obtained allow us to predict system performance at higher temperatures, e.g. at least 500°C.] The chosen gas flow rate and particle production rate provided particle mass concentrations of 1.06 mg/m³ and 0.46 mg/m³ at T= 20°C and 400°C respectively, within the range 0.1-10 mg/m³ typical of gasoline engine exhausts. The filter space velocity (gas actual volume flow rate divided by filter volume) was approximately 44000 h⁻¹ at 20°C and 101000 h⁻¹ at 400°C. Measurements were taken at locations 100 mm upstream and downstream of the filter. The SMPS particle size window was set to 9―422 nm and scan times for up and down scans were chosen as 120 seconds and 60 seconds, respectively; the time interval between measurements upstream and downstream was ~5 min. A sample dilution ratio of 60 was used.

The results obtained are shown in Table 5.

**TABLE 5**

| **Temperature (°C)** | **Air flow rate** (**L/min at T=22°C)** | **Total number particle concentration average reduction** (%) | **Number particle concentration average peak reduction (%)** |
|---|---|---|---|
| 22 | 35 | 54 | 50 |
| 200 | 35 | 57 | 54 |
| 400 | 35 | 54 | 46 |

At 400°C, the measured capture efficiency as a function of particle size was between 65% and 90% throughout the ultrafine size range, with increased scatter below 20 nm where measurement uncertainty was expected to be highest and above 100 nm where the smallest numbers of particles were detected. Little change in the pattern was seen after an exposure time of 19 hours, when the pressure drop had increased by a factor of more than four. (With effective continuous or intermittent oxidation of trapped PM, pressure drop should be of less concern.) The time-averaged size distributions show no shift in mode size across the filter

### Tests on GDI engine

A filter of identical type, but with 118 mm diameter, was fitted to the exhaust system of a Mitsubishi Carisma car with 1.8 litre GDI engine, for comparison with the standard exhaust system. The filter location was approximately one third of the way between engine exhaust manifold and tailpipe exit. With the car on a chassis dynamometer, raw exhaust samples were extracted at the tailpipe though a stainless steel sampling probe and line. Samples were first diluted in a Dekati two-stage Diluter, with a dilution ratio of 74, then analyzed using a Dekati Electrical Low Pressure Impactor (ELPI), a 12-channel real-time particle size spectrometer covering the size range 0.03 - 10 µm.

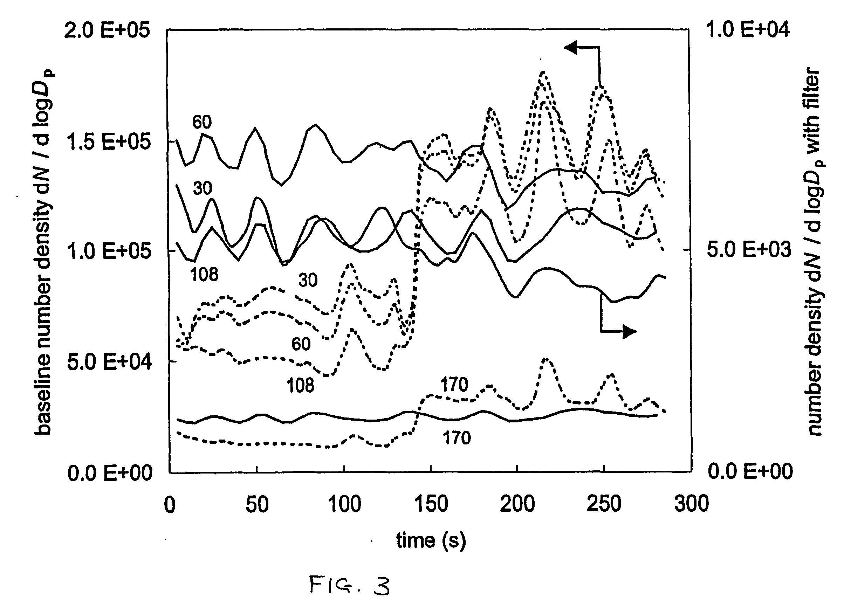

Measurements with and without the filter were made at two conditions: (a) nominally steady state at an equivalent road speed of 80 km/h, where fuel injection was in the stratified overall-lean mode with a measured equivalence ratio of around 1.8; (b) transient, over the European ECE+EUDC drive cycle. Figure 3 shows the time-resolved particle number density from the four lowest-size stages (channels) of the ELPI, during five-minute portions of the steady-state tests. The baseline measurements (dashed curves, left-hand scale) were taken immediately after the car had been taken through a drive cycle, and the plot includes periods in both 4th and 5th gears. With the filter fitted and pre-loaded during one hour of operation (solid curves, right-hand scale), the number density had fallen by an order of magnitude, for all sizes in the range 30 -170 nm. Beyond 170 nm, particles were not detected in significant numbers, with or without the filter. Thus the filter appeared to perform as well as in the laboratory simulation, an unsurprising result.

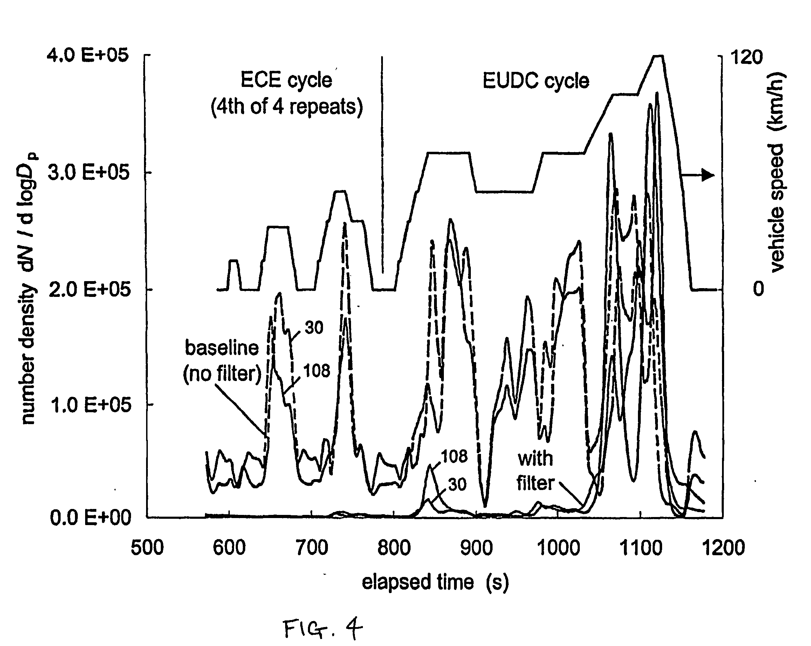

Over the ECE and lower-speed portion of the EUDC cycle, the filter reduced tailpipe number concentrations in the ultrafine range to values very significantly below the baseline levels, as illustrated in Figure 4. No significant change in filter performance over the cycle was seen between filters pre-loaded for 1 hour and for 4 hours.

### EXAMPLE 6

### Electrostatic separators

A wire-cylinder electrostatic trap consisting of a grounded stainless-steel pipe of 50 mm diameter and 1 m length with an axial discharge electrode of 0.1 mm tungsten wire was constructed. The dimensions were selected on the basis of estimates of the axial distance required for 100% particle capture at typical gas velocities in a laboratory simulation, supported by analytical modelling. The wire was energized using a Start Spellman SL300 high voltage power supply and kept both taut and centrally located by an insulated tensioning device which allows the trap to be installed in-line with a simulated exhaust pipe, in place of the filter shown in Figure 2. Particle charging was expected to occur through ion bombardment in the corona discharge, prior to transport to the pipe wall by electrophoretic drift.

A simulated gasoline engine exhaust (generated as described in Example 5) dispersed in particle-free nitrogen, was fed to the trap at ambient temperature. The residence time within the trap was <1s, ensuring turbulent flow. With the field, at *V* = 7 kV and with a corona current around 1 mA, the particle numbers at outlet were many orders of magnitude smaller than at inlet, over most of the size range and for all the radial sampling positions (measured within a 15 min period). In the 10 - 20 nm range, the reduction in particle number was still two orders of magnitude. Evidence that particles had been deposited, rather than remaining gas-borne with a radial shift, was provided by observation of a thin, uniform, black deposit on the trap wall after some 3 hours of running.

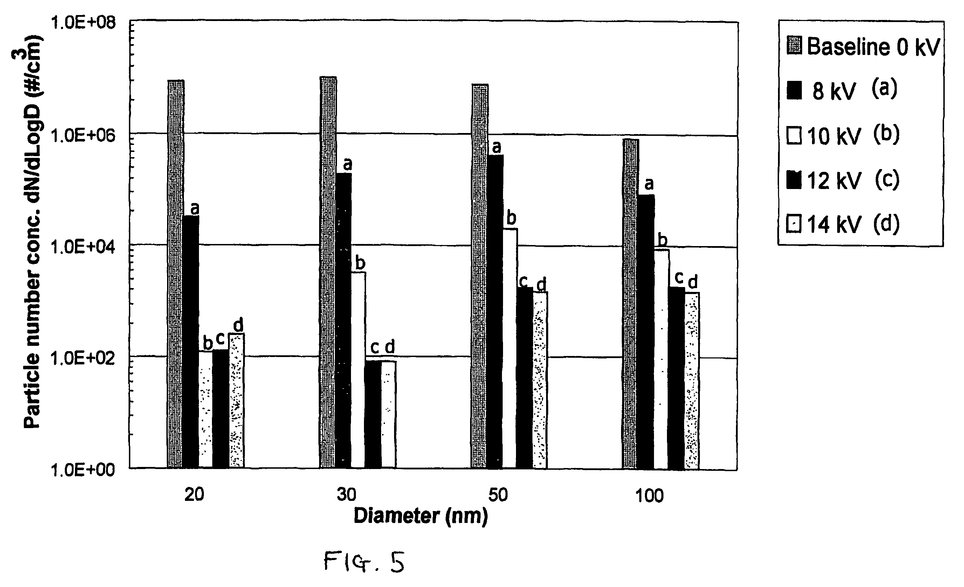

The experiment was repeated over a range of voltages and the results are shown in Figure 5. As can be seen, the particulate separation in this arrangement reaches a plateau above about 12kV.

### EXAMPLE 7

### Catalysed ESP

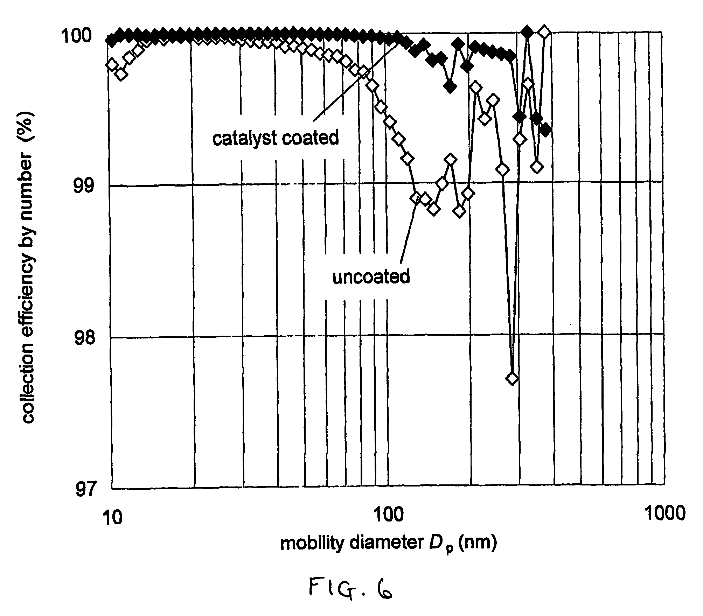

A simulated gasoline engine exhaust was heated to 400°C and fed to the trap (described in Example 6) at that temperature. The residence time within the trap was 0.6 s, ensuring a realistic turbulent flow. With the electric field maintained at 8kV, the particle trapping efficiency was measured as a function of particle diameter. After completion of this test, the simulated exhaust pipe (see Figure 2) was replaced by an identical pipe which had been coated in 10wt% K/gamma-alumina catalyst. The results, shown in Figure 6, appear to indicate that the catalyst does not materially affect the performance of the separator, and if anything, provides a slight improvement in collection efficiency for larger particle sizes.

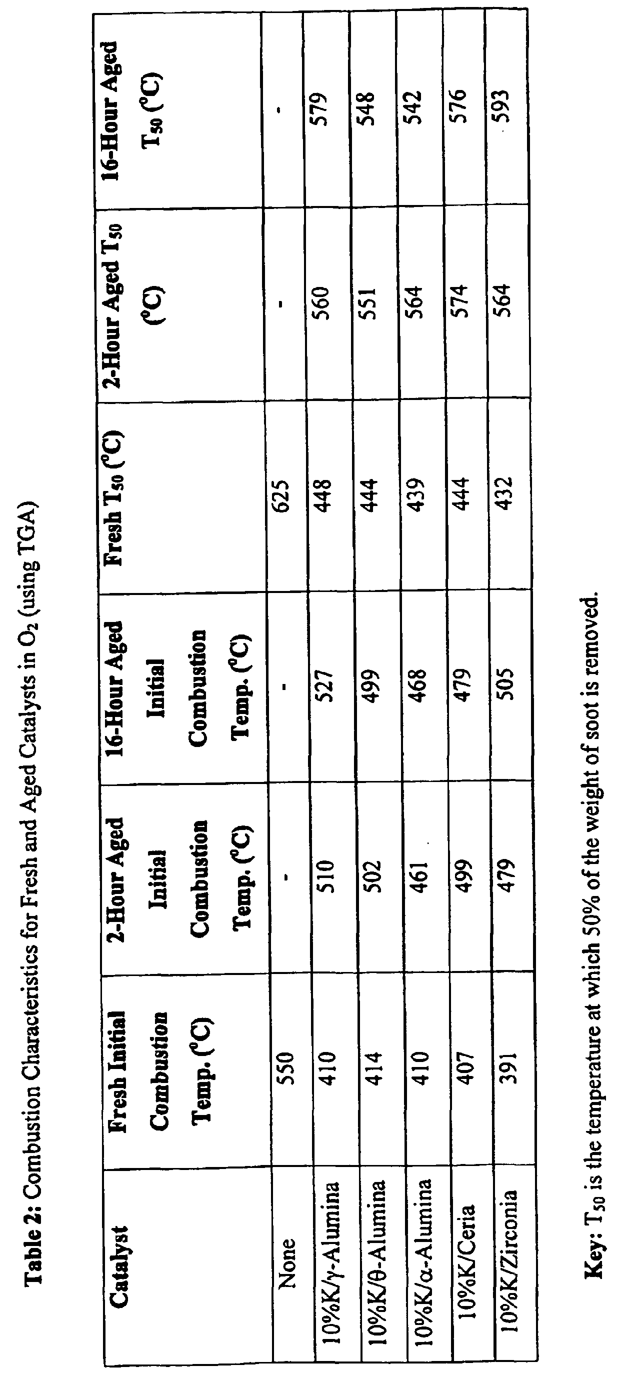

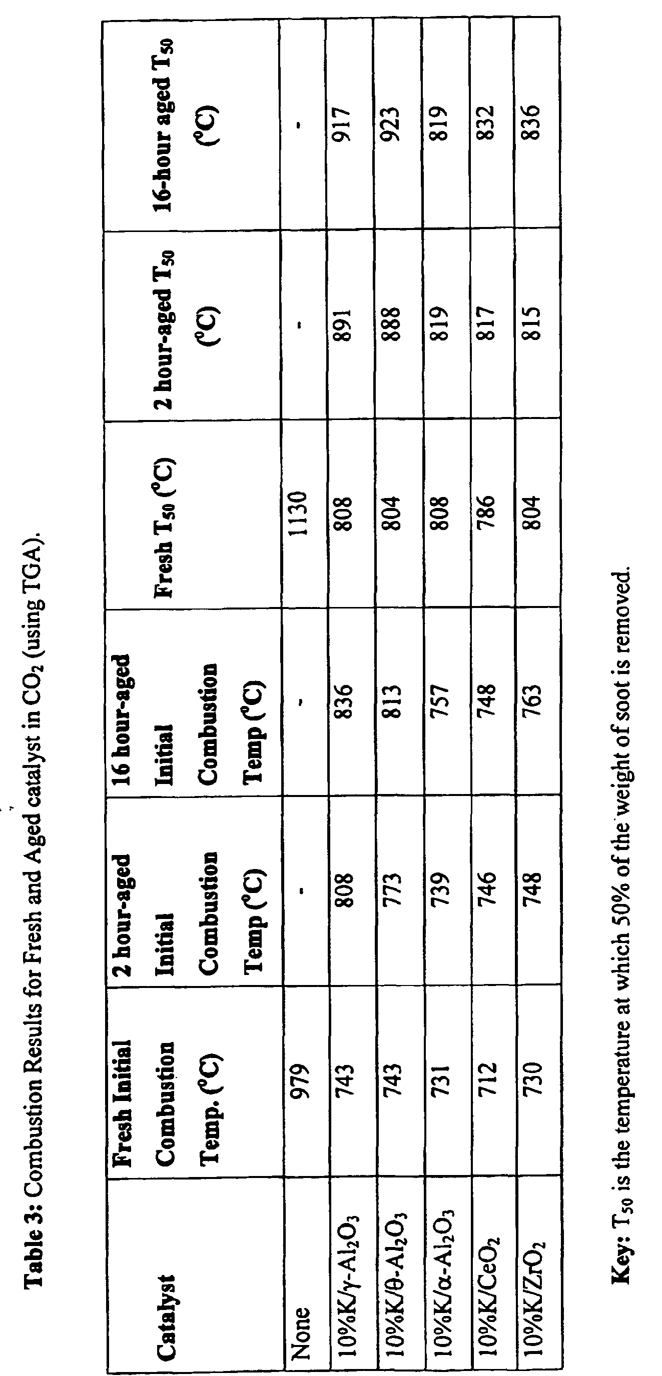

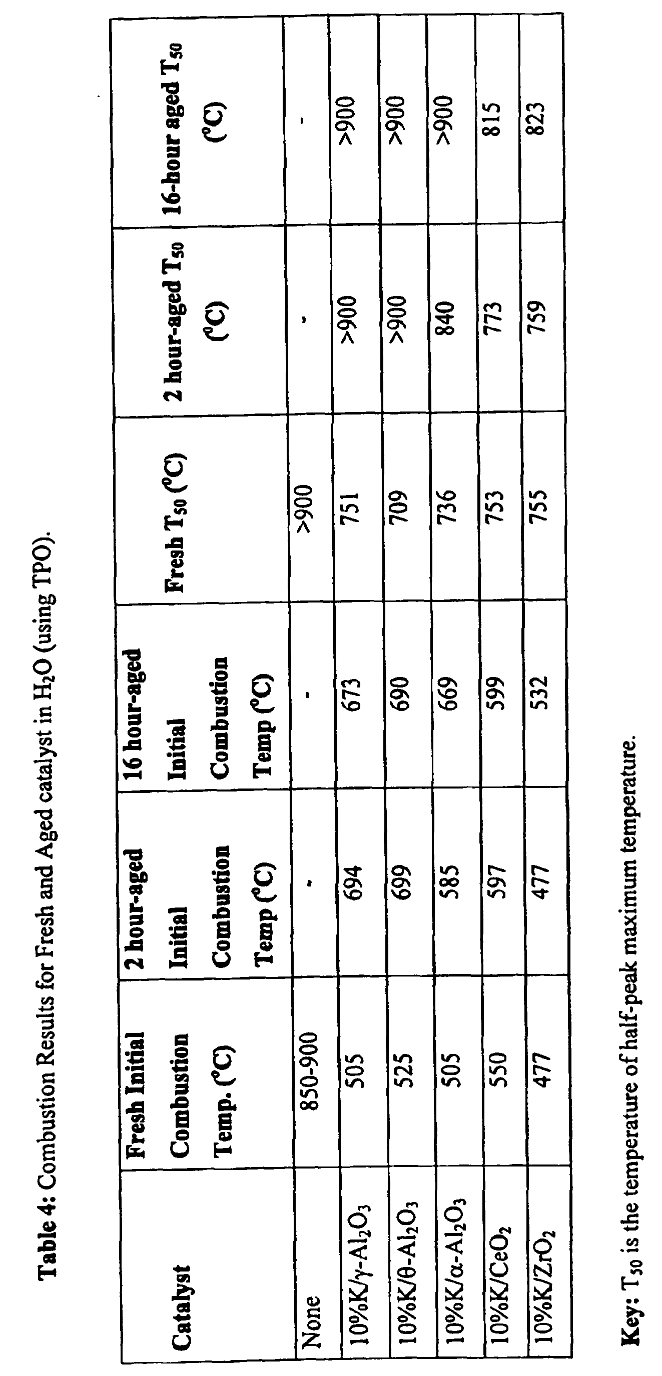

## Claims

1. A gasoline engine having an exhaust system, which exhaust system comprising means for trapping particulate matter (PM) from the exhaust gas and a catalyst comprising a supported alkali metal for catalysing the oxidation of the PM, **characterised in that** the exhaust system comprises a three-way catalyst located between the engine and the PM oxidation catalyst and **in that** the trapping means is suitable for trapping PM of <100nm.

2. An engine according to claim 1, wherein the alkali metal is lithium, sodium, potassium, rubidium or caesium or an optionally eutectic mixture of any two or more thereof, preferably potassium.

3. An engine according to claim 1 or 2, wherein the elemental alkali metal is present in the catalyst at from 1% to 20% by weight of the total catalyst, preferably 5-15wt% and most preferably 10wt%.

4. An engine according to claim 1, 2 or 3, wherein the support comprises alumina, ceria, zirconia, titania, a silica-alumina, a zeolite or a mixture or a mixed oxide of any two or more thereof.

5. An engine according to claim 4, wherein the alumina support is alpha-alumina, theta-alumina or gamma-alumina or a mixture of any two or more thereof.

6. An engine according to any preceding claim, wherein the alkali metal is potassium and the support is alpha-alumina, zirconia or ceria or a mixture or mixed oxide of any two or more thereof.

7. An engine according to claim 4 or 6, wherein the support comprises a mixed oxide and each component of the mixed oxide is present in an amount of from 10wt% to 90wt% by total catalyst weight.

8. An engine according to claim 7, wherein the mixed oxide is a binary mixed oxide and the ratio of the cationic components present is in a ratio of from 20:80 to 50:50.

9. An engine according to any preceding claim, wherein the trapping means comprises a filter.

10. An engine according to any of claims 1 to 9, wherein the trapping means comprises a discharging electrode and a collecting electrode for electrostatic deposition of the PM and power means for applying a potential difference between the discharging electrode and the collecting electrode.

11. An engine according to claim 10, wherein the trapping means comprises a first cylinder and a wire disposed coaxially therein.

12. An engine according to claim 10 or 11, wherein the cylinder forms part of a pipe for carrying the exhaust gas.

13. An engine according to any preceding claim, wherein the trapping means is coated, at least in part, with the catalyst.

14. An engine according to claim 10, 11 or 12, wherein the collecting electrode is coated, at least in part, with a catalyst according to any of claims 1 to 9.

15. A method of combusting PM from a gasoline engine **characterised by** contacting the exhaust gas with a three-way catalyst (TWC), trapping PM of <100nm from exhaust gas downstream from the TWC and combusting the trapped PM in CO₂ and/or H₂O in the exhaust gas using a catalyst comprising a supported alkali metal at temperatures in excess of 500°C.

16. A method according to claim 15, wherein the trapping step is by electrophoresis or filtration.

## Patentansprüche

1. Ottomotor mit einem Abgassystem, wobei das Abgassystem eine Einrichtung zur Abscheidung von Feststoffen (PM) aus dem Abgas und einen Katalysator umfasst, der ein geträgertes Alkalimetall zum Katalysieren der Oxidation von den PM umfasst, **dadurch gekennzeichnet, dass** das Abgassystem einen Drei-Weg-Katalysator umfasst, der zwischen dem Motor und dem PM Oxidationskatalysator angeordnet ist und dass die Abscheidungseinrichtung geeignet ist zur Abscheidung von PM von < 100 nm.

2. Motor gemäß Anspruch 1. wobei das Alkalimetall für Lithium, Natrium, Kalium, Rubidium oder Cäsium oder ein gegebenenfalls eutektisches Gemisch von beliebigen zwei oder mehreren davon, vorzugsweise Kalium, steht.

3. Motor gemäß Anspruch 1 oder 2, wobei das elementare Alkalimetall in dem Katalysator in von 1 bis 20 Gew.-% des gesamten Katalysators, vorzugsweise 5 bis 15 Gew.-% und besonders bevorzugt 10 Gew.-%, vorliegt.

4. Motor gemäß Anspruch 1, 2 oder 3, wobei der Träger Aluminiumoxid, Ceroxid, Zirconiumoxid, Titanoxid, ein Siliciumoxid-Aluminiumoxid, einen Zeolith oder ein Gemisch oder ein gemischtes Oxid von beliebigen zwei oder mehreren davon umfasst.

5. Motor gemäß Anspruch 4, wobei der Aluminiumoxidträger für alpha-Aluminiumoxid, theta-Aluminiumoxid oder gamma-Aluminiumoxid oder ein Gemisch von beliebigen zwei oder mehreren davon steht.

6. Motor gemäß einem beliebigen vorstehenden Anspruch, wobei das Alkalimetall für Kalium steht und der Träger für alpha-Aluminiumoxid, Zirconiumoxid oder Ceroxid oder ein Gemisch oder gemischtes Oxid von beliebigen zwei oder mehreren davon steht.

7. Motor gemäß Anspruch 4 oder 6, wobei der Träger ein gemischtes Oxid umfasst und jeder Bestandteil des gemischten Oxids in einer Menge von 10 Gew.-% bis 90 Gew.-% des gesamten Katalysatorgewichts vorliegt.

8. Motor gemäß Anspruch 7, wobei das gemischte Oxid für ein binäres gemischtes Oxid steht und das Verhältnis der vorliegendne kationischen Bestandteile in einem Verhältnis von 20:80 bis 50:50 vorliegt.

9. Motor nach einem beliebigen vorstehenden Anspruch, wobei die Abscheidungseinrichtung einen Filter umfasst.

10. Motor nach einem beliebigen der Ansprüche 1 bis 9, wobei die Abscheidungseinrichtung eine Entladungselektrode und eine Sammelelektrode umfasst zur elektrostatischen Abscheidung der PM und eine Stromeinrichtung zum Anlegen einer Potenzialdifferenz zwischen der Entladungselektrode und der Sammelelektrode.

11. Motor gemäß Anspruch 10, wobei die Abscheidungseinrichtung einen ersten Zylinder umfasst und einen Draht, der darin koaxial angeordnet ist.

12. Motor gemäß Anspruch 10 oder 11, wobei der Zylinder einen Teil eines Rohrs bildet zum Transportieren des Abgases.

13. Motor nach einem beliebigen vorstehenden Anspruch, wobei die Abscheidungseinrichtung zumindest zum Teil mit dem Katalysator beschichtet ist.

14. Motor gemäß Anspruch 10, 11 oder 12, wobei die Sammelelektrode zumindest zum Teil mit einem Katalysator gemäß einem der Ansprüche 1 bis 9 beschichtet ist.

15. Verfahren zum Verbrennen von PM aus einem Ottomotor, **gekennzeichnet durch** Kontaktieren des Abgases mit einem Drei-Weg-Katalysator (TWC), Abscheidung von PM von < 100 nm aus dem Abgas nachgeschaltet zu dem TWC und Verbrennen der abgeschiedenen PM in CO₂ und/oder H₂O in dem Abgas unter Verwendung eines Katalysators, der ein geträgertes Alkalimetall umfasst, bei Temperaturen von mehr als 500 °C.

16. Verfahren gemäß Anspruch 15, wobei die Abscheidungsstufe durch Elektrophorese oder Filtration erfolgt.

## Revendications

1. Moteur à essence ayant un système d'échappement, lequel système d'échappement comprenant un moyen pour capter des matières particulaires (MP) à partir du gaz d'échappement et un catalyseur comprenant un métal alcalin supporté pour catalyser l'oxydation des MP, **caractérisé en ce que** le système d'échappement comprend un catalyseur à trois voies positionné entre le moteur et le catalyseur à oxydation de MP et **en ce que** le moyen capteur est approprié pour capter des MP < 100 nm.

2. Moteur selon la revendication 1, dans lequel le métal alcalin est du lithium, du sodium, du potassium, du rubidium ou du césium ou un mélange facultativement eutectique de deux ou plus quelconques de ceux-ci, de préférence du potassium.

3. Moteur selon la revendication 1 ou 2, dans lequel le métal alcalin élémentaire est présent dans le catalyseur selon une quantité de 1 % à 20 % en poids du catalyseur total, de préférence de 5 à 15 % en poids et de façon préférée entre toutes 10 % en poids.

4. Moteur selon la revendication 1, 2 ou 3, dans lequel le support comprend de l'alumine, de l'oxyde de cérium, de la zircone, de l'oxyde de titane, une silice-alumine, une zéolite ou un mélange ou un oxyde mélangé de deux ou plus quelconques de ceux-ci.

5. Moteur selon la revendication 4, dans lequel le support d'alumine est une alumine alpha, alumine thêta, ou alumine gamma ou un mélange de deux ou plus quelconques de celles-ci.

6. Moteur selon l'une quelconque des revendications précédentes, dans lequel le métal alcalin est du potassium et le support est de l'alumine alpha, de la zircone ou de l'oxyde de cérium ou un mélange ou un oxyde mélangé de deux ou plus quelconques de ceux-ci.

7. Moteur selon la revendication 4 ou 6, dans lequel le support comprend un oxyde mélangé et chaque composant de l'oxyde mélangé est présent selon une quantité allant de 10 % en poids à 90 % en poids du poids total du catalyseur.

8. Moteur selon la revendication 7, dans lequel l'oxyde mélangé est un oxyde mélangé binaire et le rapport des composants cationiques présents est dans un rapport allant de 20 : 80 à 50 : 50.

9. Moteur selon l'une quelconque des revendications précédentes, dans lequel le moyen capteur comprend un filtre.

10. Moteur selon l'une quelconque des revendications 1 à 9, dans lequel le moyen capteur comprend une électrode émissive et une électrode collectrice pour le dépôt électrostatique des MP et un moyen de puissance pour appliquer une différence potentielle entre l'électrode émissive et l'électrode collectrice.

11. Moteur selon la revendication 10, dans lequel le moyen capteur comprend un premier cylindre et un câble disposé de façon coaxiale dans celui-ci.

12. Moteur selon la revendication 10 ou 11, dans lequel le cylindre fait partie d'un tuyau pour transporter le gaz d'échappement.

13. Moteur selon l'une quelconque des revendications précédentes, dans lequel le moyen capteur est enduit, au moins en partie, avec le catalyseur.

14. Moteur selon la revendication 10, 11 ou 12, dans lequel l'électrode collectrice est enduite, au moins en partie, avec le catalyseur selon l'une quelconque des revendications 1 à 9.

15. Procédé de combustion de MP provenant d'un moteur à essence **caractérisé par** les étapes consistant à mettre en contact le gaz d'échappement avec un catalyseur à trois voies (CTV), capter des MP < 100 nm provenant d'un gaz d'échappement en amont du CTV et brûler les MP captées dans du CO₂ et/ou H₂O dans le gaz d'échappement à l'aide d'un catalyseur comprenant un métal alcalin supporté à une température de plus de 500°C.

16. Procédé selon la revendication 15, dans lequel l'étape de captage se fait par électrophorèse ou filtration.
